# EUROPEAN PATENT APPLICATION

(11) **EP 4 459 599 A1**
(43) Date of publication of application: **06.11.2024**
(21) Application number: 23275076.0
(22) Date of filing: 05.05.2023
(51) Int. Cl.: G09B 9/00, G09B 9/06

(54) **SIMULATING VESSEL BEHAVIOUR**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer-implemented method of simulating vessel behaviour comprises receiving (202) input data comprising at least an identifier for a vessel and position information of the vessel during real-world use of the vessel, and providing (204) the input data to a simulator application that simulates behaviour of vessels. The method further includes executing (206) the simulator application to perform a simulation based on the input data, and outputting (208) data generated by the simulation.

## Description

### FIELD OF THE INVENTION

The present invention relates to simulating the behaviour of a vessel.

### BACKGROUND

Good quality data for the development of capability for marine or underwater systems at an unclassified level is not readily available to developers. Data is often closed off at high classifications or proprietary to those who collected it. Thus, many parties within the industry rely on the same data sets, which are re-used repeatedly across many application deployments.

As a result, there is relatively limited innovation in the underwater space, which hinders the development of new capabilities. It can also disadvantage smaller businesses and new players in the market who do not have access to the same data sets as established players. This can lead to a lack of diversity and competition in the industry, which in turn stifles innovation and limits the development of new technologies.

For advanced marine and underwater systems application development there is also a need for realistic data from the underwater space at a granularity that conventional simulations are not able to provide. Conventionally-available data is not representative of many real-world maritime events.

For many technical purposes related to underwater vessels, such as platform design and software application development, the more realistic the data used, the most accurate the results. Obtaining data for scenarios that are rare in the real world, e.g. encounters between specific types of vessels, can be difficult or impossible, and so existing simulators tend to produce less realistic results.

### SUMMARY

Embodiments of the present invention are intended to address one or more of the above technical problems.

According to an aspect of the present invention, there is provided a computer-implemented method of simulating vessel behaviour, the method comprising:
receiving input data comprising at least an identifier for a vessel and position information of the vessel during real-world use of the vessel;
providing the input data to a simulator application that simulates behaviour of vessels;
executing the simulator application to perform a simulation based on the input data, and
outputting data generated by the simulation.

The input data may be obtained, directly or indirectly, from at least one sensor. The at least one sensor may be mounted in or on the vessel during the real-world use of the vessel. The position information in the input data may comprise information on position, course and speed of the vessel, e.g. over a period of time.

The method may comprise processing the input data to a form suitable as input to the simulator application. The input data may comprise data relating to a plurality of vessels and the processing the input data may comprise extracting data fields corresponding to the vessel from the input data. The input data may comprise information generated by an Automatic Identification System (AIS) component of the vessel. The method may comprise extracting data from the input data that corresponds to data fields of an AIS message including: MMSI; Shipname; Timestamp; ShipID; VesselType; Course; Heading; LAT; LON; SPEED and Status.

The method may comprise:
checking if a unit having the Shipname of the input data already exists in a scenario stored by the simulator application;
if the unit having the Shipname of the input data does not already exist in the scenario, creating a new unit corresponding to the Shipname and assigning the unit a side, a latitude and longitude on a map, and setting a course for the unit in the scenario, or
if the unit having the Shipname of the input data already exists in the scenario, updating the course and speed of the unit in the scenario based on the input data.

The simulator application may comprise a (naval) warfare/combat simulator application. The method may comprise using the input data to create a unit corresponding to the vessel in a scenario in the simulator application. The simulator application may simulate behaviour of the vessel and at least one other unit in the scenario. The at least one other unit may be created using data obtained from a source other than the input data. The vessel behaviour may include movement/positioning of the vessel over time and/or interaction of the vessel with one or more other units, e.g. another vessel.

The method may comprise transferring and/or storing the data generated by the simulation for further processing. The method may further comprise using the data generated by the simulation as training data in a machine learning process. The method may further comprise performing Monte Carlo analysis based on the data generated by the simulation. The method may further comprise providing the data generated by the simulation to a data platform, e.g. a distributed streaming platform. The data generated by the simulation may be serialised using a protocol buffer for the distributed streaming platform.

The method may further comprise receiving additional data from one or more additional source, and providing the additional data to the data platform along with the data generated by the simulation.

According to another aspect of the present invention, there is provided a system configured to simulate vessel behaviour, the system comprising:
a computer comprising a processor and a storage configured to execute a method substantially as described herein.

According to another aspect of the present invention, there is provided a computer-implemented method of simulating movements/behaviour of underwater vehicles (or generating/processing data relating to simulation or interaction of underwater vehicles/systems) substantially as described herein.

According to another aspect of the present invention, there is provided a computer-implemented method of processing input data to produce processed input data for a simulator application substantially as described herein.

According to another aspect of the present invention, there is provided a simulator application modified to process input data substantially as described herein. The processing may comprise receiving the input data and simulating a scenario including a unit corresponding to the vessel of the input data.

According to a further aspect of the present invention there is provided a computer readable medium, or circuit, storing a computer program to operate any method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of a computer system that can be configured to execute embodiments;
Figure 2 is a flowchart depicting steps performed by an example embodiment;
Figure 3 is a mind map useable to derive the Scenario Configuration and Scenario Control parameters in some embodiments;
Figure 4 is a block diagram of an example use case of an embodiment, and
Figure 5 is a block diagram further illustrating how data generated by embodiments can be used.

### DETAILED DESCRIPTION

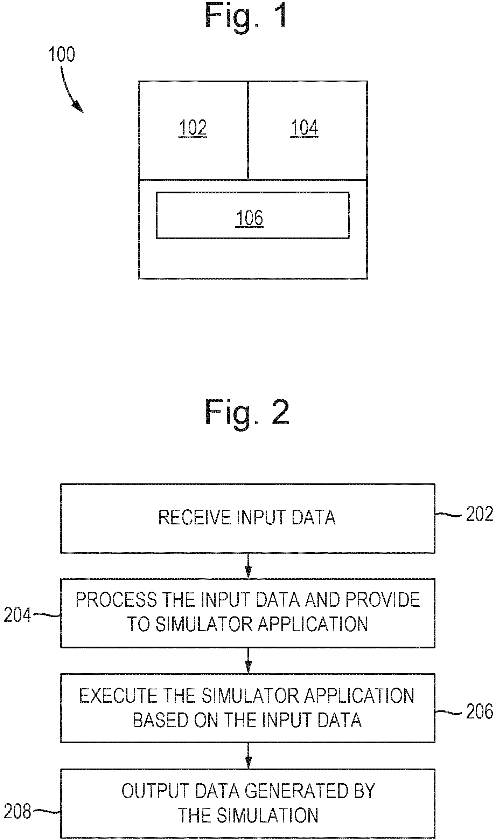

Figure 1 is a block diagram of a computer system 100 configurable to execute embodiments of the invention. The system will normally comprise, or be associated with, at least one processor 102, a memory 104 and a communications interface 106. The system can comprise, for example, a desktop class PC. Other components and features of the system, such as a user interface, housing, power supply/source, external storage interface, a display, etc, will be well-known to the skilled person and need not be described herein in detail. Alternative embodiments may use one or more computer systems in communication with each other, e.g. one configured to receive and process input data and another configured to execute a simulator application using the processed input data. In some cases a cloud service may be used for at least some operations.

Figure 2 is a flowchart depicting operations in an example method according to an embodiment. The steps may be performed, for example, by means of software instructions being executed by the computing system 100. It will be appreciated that at least one of the steps described herein may be reordered or omitted. One or more additional steps may be performed in some cases. Further, although the steps are shown as being performed in sequence in the Figures, in alternative embodiments some of them may be performed concurrently, possibly on different processors or cores. It will also be understood that embodiments can be implemented using any suitable software, programming language, data editors, etc, and may be represented/stored/processed using any suitable data structures and formats.

In general, embodiments may simulate behaviour of vessels, or generate data related to simulation of vessels. This can involve receiving and processing input data based on real-world behaviour of a vessel so that it is input-able into, and useable by, a simulator application. The simulator application is then executed to simulate the behaviour of the vessel (and/or at least one further vessel) using at least the processed input data. This means that the simulation is based on real-world data and can provide more accurate results compared to using input data that is based on modelled behaviour only. Data representing the result/output of the simulation can then be generated and output for use by a further system or application for various purposes. For example, if data relating to a particular type of vessel, e.g. a newly-designed one, is not readily available then a user can obtain input data from the new physical vessel and process it for use by the simulator application according to an embodiment.

In embodiments the simulation can be performed using a wargaming/warfare simulator application. Wargaming can be defined as a simulation of a military operation involving two or more opposing forces, using rules, data and procedures designed to depict an actual or assumed real life/real world situation. Embodiments may use an application that simulates modern air, naval and ground combat. An example of a suitable simulator application is Command: Modern Operations or Command: Modern Operations - Professional Edition ("Command PE") published by Matrix Games (https://command.matrixgames.com).

An advantage of Command PE is the ability to rapidly customise its open source database of platforms, sensors, weapons and formations to fit the specific needs of a user. The features and operation of the simulator are described in detail in the official manual that is publicly available for download at https://www.matrixgames.com/game/command-modern-operations. Command PE includes databases that store all information on platforms (aircraft, ships, submarines, ground facilities and satellites) and components (weapons, sensors, mounts, magazines, communications gear, etc.) used in the simulation.

The present inventor has appreciated that utilising this type of simulator application allows for real-world data to be rapidly customised and streamed directly into, for example, the data layer of modern architecture to drive the development and testing of system functionality. It can also offer simulation of scenarios involving vessels and their behaviour in a highly repeatable manner. Although embodiments detailed herein use Command PE, it will be understood that an alternative simulator application having similar capabilities can be used, such as Dangerous Waters by Sonalysts Combat Simulations. The use of commercially-available software can encourage collaboration, as well as offering development time and cost benefits.

Simulator applications that can operate with embodiments can simulate the physics behind how vessels turn, start and stop. This means that the simulated vessels act they do in the real world. Another important ability of the simulator application is interaction with a programming language/script, such as a LUA interface. This allows extraction of data from the simulation and also offers the ability to make changes to running scenarios (e.g. change of course/speed/depth/bearing of vessels). Another important feature of the simulator application is ability to modify the underlying database containing unit information, e.g. built-in sonar and physics models.

A scenario can comprise one or more specific unit, e.g. a watercraft/vessel, being located in a specific geographical area during a specific time frame. The simulation may comprise predicting an outcome of the scenario based on information regarding known behaviour of/relating to the unit. For example, contact between the unit and another unit may arise as a result of the scenario. The outcome may comprise an updated location of a unit, an updated state of the unit, etc. A scenario can include other features/characteristics, such as unit behaviour, sides and posture, a trigger and event (e.g. a vessel entering or existing a particular geographical area), an action (e.g. a direction or a behaviour of a vessel, such as "dive as deep as possible and then return to periscope depth"), times and duration. Scenarios can comprise non-violent scenes, such as coastguard duties, as well as hostile contact.

At step 202 the computing system 100 receives, e.g. using a data converter application/script according to an embodiment, input data that is associated with a (physical, not simulated/modelled) vessel. The input data will typically comprise at least an identifier for the vessel and position information of the vessel. The input data will typically comprise a record of real-world use of the vessel. The input data can be obtained (directly or indirectly) from at least one sensor that senses/sensed the vessel during its real-world use. The sensor may be mounted in or on the vessel, or in an environment through which the vessel moves/moved. The input data can therefore represent real-world behaviour/movement of a physical vessel (as caused by a human operator(s) and/or a semi/fully autonomous control system) at/over a period of time.

Examples of sensors that can generate/provide the input data include a velocity sensor, accelerometer, sonar array, radar, visual/camera, hydrophone, echosounder, pressure sensor, gyroscope, radio antenna, etc. Examples of observations recorded by the sensor(s) include course, speed, depth, bearing, range, classification, bearing rate, range rate, pitch, roll, etc. The observations may relate to the vessel on which the sensors are mounted, characteristics of one or more other vessel(s) and/or the environment/object(s). It will be appreciated that the data type, format, units, etc, of the input data can vary.

The input data can therefore represent recorded real-world positioning/behaviour of a vessel over a block of time. An example application for an embodiment that uses the input data comprises monitoring the location of a vessel such as a fishing vessel or ferry that exhibits repeated behaviour. Data representing the ferry's location can then be processed for use by the simulator application, which can simulate how another vessel, such as a military submarine, may react in response to the presence of the ferry. The data resulting from the simulation (aspects of which can be repeated or modified by a user if desired) can help another application generate data that can be used, for example, to help the submarine avoid the ferry.

In typical embodiments the input data can comprise Automatic Identification System (AIS) data. AIS is a known type of automatic tracking system that uses transceivers on vessels to provide information such as unique vessel identification (a unique nine digit identification number known as the Vessel Maritime Mobile Service Identity (MMSI)), its position, course and speed; see, e.g., https://en.wikipedia.org/wiki/Automatic_identification_system. An AIS transceiver sends data periodically, e.g. every 2 to 10 seconds depending on a vessel's speed while underway, or every 3 minutes while a vessel is at anchor. Embodiments may receive the input data directly from one or more AIS transceiver, possibly in a substantially real-time manner, or may receive it indirectly, e.g. from a data store or computer that has pre-stored historical AIS data relating to one or more vessels.

An AIS message typically contains a fixed number of data fields that are used to transmit information about each vessel. Each data field has a fixed length in bits, and the number of data fields included in an AIS message can vary depending on the message type and the data being transmitted. The most common AIS message type is type 1, which contains 28 data fields. Other AIS message types may contain anywhere from 5 to 29 data fields or up to 200 data fields for types 19 and 24. Not all data fields are present in every message, and some data fields may be optional or may only be included under certain circumstances. Additionally, some AIS messages may include additional information beyond the standard data fields, such as route information or weather data. These can be included as variable-length data fields. Below is a list of common AIS data fields available in a message:
accuracy; aid_type; ais_version; alt; assigned; band; callsign; course; cs; dac; data; day; dest_mmsi; destination; display;
dsc; dte; epfd; fid; gnss; heading hour; imo; incrementt1 incremtt2; increments; increments lat; Ion; maneuver;
minute; mmsi; mmsi1; model; month; msg22; msg_type; name; name_ext; number1; number2; number3; number4; off_position; offset1
offset2; offsets; offset4; partno; radio; raim; repeat; reserved_1; reserved_2; second; serial; ship_type; shipname; spare_1; speed
status; timeout1; timeout2; timeout3; timeout4; timestamp; to_bow; to_port; to_starbo; ard; to_stern; turn; vendorid; virtual_aid; year

At step 204 embodiments can process the received input data so that it is suitable for use by the simulator application. Before the AIS data can be used by the simulator application as described below, it will usually need to be processed, e.g. by a script executed by the computing system 100, to remove unnecessary data that won't be utilised by the simulation. In some cases, the input data may comprise AIS data relating to a plurality of vehicles/vessels and embodiments may extract data relating to one vessel only for processing.

In some embodiments the input data is saved as a spreadsheet, e.g. CSV file, for extraction via the Lua console in Command PE. Command PE offers a scenario editor that can be used to manually create warring sides and add bases, other facilities, ships, aircraft and so on. Command PE also has a Lua scripting engine to control behaviours or add entities/units for building scenarios. Lua is a known scripting language and the Lua functionality in Command PE allows additional flexibility, especially for features or custom behaviours that are not already built in.

In order to input processed AIS data into Command PE, a scenario first needs to be built using the Lua scripting language. Although the initial setup could be completed using the Command PE menus, for consistency, the following options can also be included in the Lua script: Setting the time; Creating sides; Setting the posture of each side; Creating an initial unit (Ownship); Setting the name, side, ID, and heading of the initial unit, and Setting the initial unit course.

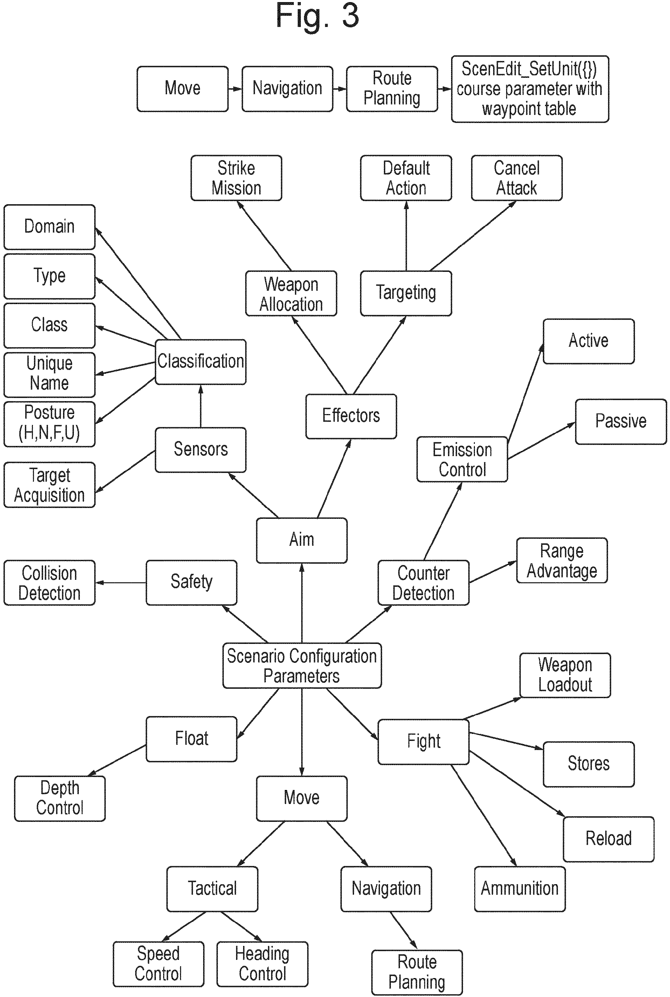

Embodiments can use a library of Lua scripts for the generation and configuration of a scenario and Command Scenario Parameters, as well as another library for the control of a live scenario: Scenario Config, Scenario Control. Figure 3 is a mind map useable to derive the Scenario Configuration and Scenario Control parameters for Command PE in some embodiments. This can be achieved by identifying high level operational concepts, deriving the control and configuration parameters used to achieve these concepts, and identifying the Lua functions used to control these parameters: Safety; Aim; Counter Detection; Float; Move; Fight.

For embodiments that use Command PE as the simulator application, data corresponding to the following data fields of an AIS message can be extracted:
MMSI; Shipname; Timestamp; ShipID; VesselType; Course; Heading; LAT; LON; SPEED and Status.

The Command PE software, utilising a LUA script according to an embodiment, may be configured to read in the above headings as variables and to create or modify a scenario based on this data. The script starts at the first line of data in the CSV file and reads in each data entry. If the unit has a unique Shipname, i.e. it does not already exist in the scenario, then the LUA script will create the unit and assign it a side, a latitude and longitude on the map, and set a course. If, however, the unit does already exist in the scenario and additional entries for the existing vessel are present in the CSV, then the code will update the course and speed of the vessel within Command PE based on that additional information. Once the scenario is fully created/modified it can be saved in a file.

At step 206 the simulator application is executed to perform a simulation based on at least the processed input data. This can be controlled/initiated by a user to some extent, e.g. instructing the "play" of the simulation to begin using the user interface of the application. Inside of Command PE it is possible to supplement the processed input data with information regarding other vessels that were not present in the real-world data to create, for example, edge-cases that can be very rare to capture, dangerous occurrences, or something that would be deemed classified when recorded.

Saving the scenario in a file can make it replayable in an unlimited manner by the simulator application. It can also allow the data to be used for one or more additional processes including Monte Carlo analysis, which is a statistical technique used to understand the impact of uncertainty and randomness in complex systems, such as simulations, and is available in Command PE. This involves running multiple simulations of a scenario with varying input values to generate a range of possible outcomes. By analysing the distribution of the outcomes, it is possible to estimate the probabilities of different results occurring. Monte Carlo analysis can be used for risk assessment, e.g. determining what would be the safest or most risk averse manoeuvre to take by a vessel that is approaching a scenario in a variety of ways. Another example use case is optimisation, where the same data is output in different ways to help understand the most efficient method for consuming it in an Al algorithm or application.

Command PE Output Definitions include data related to the movement of the "own-ship" or player controlled unit. The below instance refers to a submarine.

| **Data Label** | **Description** | **Typical Values/Units** |
|---|---|---|
| Latitude | Angular distance of the submarine, north or south of the earth's equator. | 0 to ±90° |
| Longitude | Angular distance of the submarine east or west of the Greenwich meridian. | 0 to ±180° |
| Depth | Distance of the submarine from the surface | Meters |
| Heading | Compass bearing in which the submarines bow is pointed | 0 to 360° |
| Speed in Water | Current submarine speed through water | |
| Speed Over Ground | Current submarine speed equivalent over ground | |
| Periscope Up | Position of the submarine's periscope | True/False |
| Periscope Direction | The direction that the submarine's periscope is currently pointed | 0 to 360° |
| Noise | Detectable noise of the submarine as it moves through the water. Directly proportional to the speed of the submarine | dB |
| Timestamps | The date and time that the message was received. | YYYY-MM-DD HH-MMSS |

Contact Messages are produced when units enter the detection zone of the submarine. This is illustrated by a white circle in-game.

| **Data Label** | **Description** | **Typical Values/Units** |
|---|---|---|
| Name | Contact designation | CNumber-Number |
| Source | The sensor that has detected the contact | Bow-1 or Flank-1 |
| Age | The sequence in which messages are received. | Number |
| Latitude | Angular distance of the contact, north or south of the earth's equator | 0 to ±90° |
| Longitude | Angular distance of the contact east or west of the Greenwich meridian. | 0 to ±180° |
| MSL | Mean Sea Level - Used for elevation measurements by pilots during the course of a flight | M |
| BrgRel | Game calculated: In nautical navigation the relative bearing of an object is the clockwise angle in degrees from the Degrees heading of the vessel to a straight line drawn from the observation station on the vessel to the object | Degrees |
| BrgTrue | Game calculated: Angle between North and an object observed from the vessel | Degrees |
| Classification | The category of vessel being detected | |
| Bearing Rate Deg/s | | M/s |
| Bearing Rate Rng Rate M/s | | |
| Bearing Range Error Err Deg | Difference between game calculated bearing and actual bearing | Deg/m |
| Bearing Range Error Err M | Difference between game calculated bearing and actual bearing | M/s |
| Solution Brg True | Actual bearing | Degrees |
| Solution Rng M | | |
| Solution Crs Deg | | |

Narrowband vs Broadband refers to the type of sonar in use. Narrowband is directional sonar whereas broadband is "catch-all".

| **Data Label** | **Description** | **Typical Values/Units** |
|---|---|---|
| Sensor ID | Individual sensor number, unique to each | Number |
| Sensor Name | Sensor name relating to the position of the sensor | Bow or Flank |
| Timestamp | Time and date that the message was received | YYYY-MM-DD HH-MM-SS |

At step 208 data generated by executing the simulation is output. The output data can be stored and/or transmitted, e.g. via a wired or wireless communications link/network, to a remote device. Further processing may be performed on the data by the computing system 100 and/or by at least one further computing system that is in communication with it.

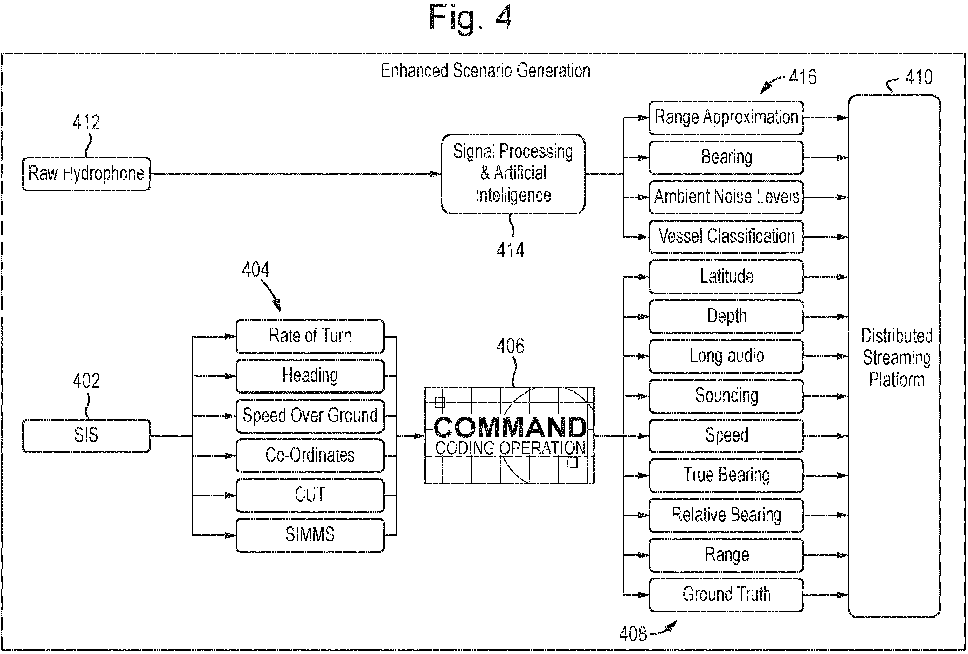

Figure 4 is a block diagram of an example use case of an embodiment. The input data 402 in the form of an AIS message is processed to generate processed input data 404 that is suitable for use in the simulator application 406. The Figure shows different example data fields to those described above. The simulator application is executed to perform a simulation based on at least the processed input data, and may generate output data 408 that can be received by a data platform 410, e.g. a distributed streaming platform.

Thus, in some cases, once the output data 408 has been produced by Command PE 406, it can be injected into a data platform 410. This may be done using a secondary script which is also produced in LUA. This script takes the data values 408 as outputs from Command PE and converts them into usable data. To do this the code may serialise the data using Protofbuf in some embodiments. Protobuf or protocol buffers are Google's^{™} language-neutral, platform-neutral, extensible mechanism for serializing structured data - similar to XML, but smaller, faster, and simpler. It allows users to define how they want data to be structured once and can then use special generated source code to easily write and read structured data to and from a variety of data streams and using a variety of languages.

Embodiments can use protocol buffers because they are ideal for a situation where it is desirable to serialize structured, record-like, typed data in a language-neutral, platform neutral, extensible manner. They are conventionally used for defining communications protocols (together with gRPC) and for data storage. Some of the advantages of using protocol buffers include: compact data storage; fast parsing; availability in many programming languages; optimized functionality through automatically-generated classes. Once serialised, in some embodiments the code "produces" the data to Apache Kafka^{™}, a known data streaming platform, with the transaction being facilitated by Kafka^{™} brokers. In Kafka^{™} this data is held in Kafka^{™} Topics, and these topics can be consumed by applications such as Human-Machine Interfaces and algorithms.

In some cases, the data provided to the data platform 410 may include information derived from one or more other source in addition to the data 408 output by the simulator application 406 executing in accordance with an embodiment. In the example of Figure 4 a hardware component comprising a hydrophone 412 may output data that can be used in sound profile matching for vessel classification. This may be collected as part of a commercial (unclassified) study. Conventionally, such data is difficult to manipulate and may be sparse in features. However, when used in combination with embodiments this data can be processed by a signal processing software component 414 to produce a set of data values 416 that are also received by the data platform 410. Data 416 can then be processed in various ways in combination with the data 408. This arrangement allows the collection of unclassified data sets at scale to be used in conjunction with embodiments. In alternative embodiments the additional data may comprise water imagery of ships for automatic image recognition (i.e. is the object in an image a ship or not a ship).

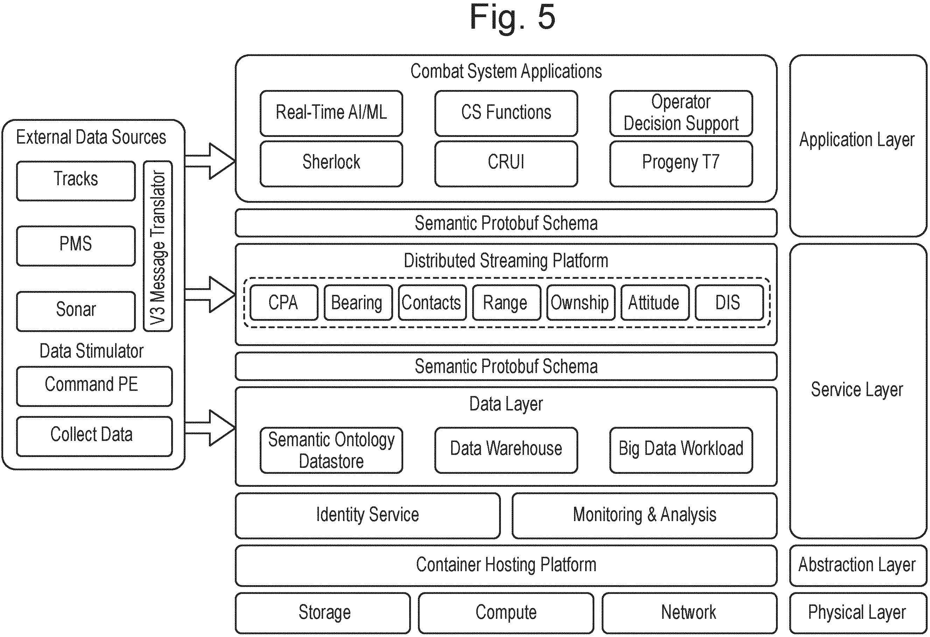

Figure 5 is a block diagram further illustrating how data generated by embodiments may be used. The data output by executing the simulator application 406 in accordance with an embodiment may be provided (either alone or in combination with data obtained from one or more other source) to a data layer, a distributed streaming platform and/or an application set. One or more of these may be in communication, via the application layer, service layer, abstraction layer and/or physical layer, with one or more hardware/software component(s). Non-exhaustive examples are shown in the Figure. This arrangement can, for example, support deep learning and other Al-based methodologies, especially when combined with a distributed streaming platform. For instance, the data 408 may be used as training data in a machine learning process, e.g. for use in an autonomous vehicle control system. As the data is based on real-world vessel activity the results will be more accurate than conventional cases where such data is based on modelling. This data can be used to drive Digital Twin models of underwater vessels for the purpose of model calibration, real-time monitoring, predictive maintenance and/or optimisation, for example.

Embodiments can allow the combining of real-world data with the data 408 generated by the simulator application based on the processed input data, which allows for manipulation of scenarios to introduce interesting events. Embodiments can allow data rich scenarios to be generated at an unclassified level from a security perspective. Embodiments can also enable creative contributions from the wider software development community to address the current limitations. Advancement in the tools and equipment available to industry can enabled rapid capability growth in the data-harvesting sector, allowing large data libraries to be formed and shared across industry, driving capability and enabling anyone from one man enterprises to SMEs to engage in the evolution of capability for the combat system. Embodiments can provide on demand data in a controlled and repeatable manner.

Other advantages offered by embodiments include increased flexibility by adjusting variables in a simulation driven by real-world data, and a more comprehensive dataset that adds wider parameters for developers to build and test against. Embodiments can also provide faster iteration, e.g. the simulation enables Monte Carlo analysis, as well as cost effectiveness because real-world data can be supplemented at a fraction of the cost of trying to collect a specific event in the wild. Embodiments can also provide the advantage of increased accuracy of simulation by combining real-world data with simulation to model dangerous/edge-case events, for example.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of simulating vessel behaviour, the method comprising:
receiving (202) input data comprising at least an identifier for a vessel and position information of the vessel during real-world use of the vessel;
providing (204) the input data to a simulator application that simulates behaviour of vessels;
executing (206) the simulator application to perform a simulation based on the input data, and
outputting (208) data generated by the simulation.

2. A method according to claim 1, wherein the input data is obtained, directly or indirectly, from at least one sensor.

3. A method according to claim 2, wherein the at least one sensor is mounted in or on the vessel during the real-world use of the vessel, and the position information in the input data comprises information on position, course and speed of the vessel over a period of time.

4. A method according to any preceding claim, further comprising processing (204) the input data to a form suitable as input to the simulator application.

5. A method according to claim 4, wherein the input data comprises information generated by an Automatic Identification System, AIS, component of the vessel, and the method comprises extracting data from the input data that corresponds to data fields of an AIS message including: MMSI; Shipname; Timestamp; ShipID; VesselType; Course; Heading; LAT; LON; SPEED and Status.

6. A method according to claim 5, wherein the method comprises:
checking if a unit having the Shipname of the input data already exists in a scenario stored by the simulator application;
if the unit having the Shipname of the input data does not already exist in the scenario, creating a new unit corresponding to the Shipname and assigning the unit a side, a latitude and longitude on a map, and setting a course for the unit in the scenario, or
if the unit having the Shipname of the input data already exists in the scenario, updating the course and speed of the unit in the scenario based on the input data.

7. A method according to any preceding claim, wherein the simulator application comprises a naval warfare/combat simulator application.

8. A method according to any preceding claim, further comprising using the input data to create a unit corresponding to the vessel in a scenario in the simulator application.

9. A method according to any preceding claim, further comprising using the data generated by the simulation as training data in a machine learning process.

10. A method according to any of claims 1 to 8, further comprising performing Monte Carlo analysis based on the data generated by the simulation.

11. A method according to any of claims 1 to 8, further comprising providing the data generated by the simulation to a data platform.

12. A method according to claim 11, wherein the data platform comprises a distributed streaming platform, and the data generated by the simulation is serialised using a protocol buffer for the distributed streaming platform.

13. A method according to claim 11 or 12, further comprising receiving additional data from one or more additional source, and providing the additional data to the data platform along with the data generated by the simulation.

14. A system (100) configured to simulate vessel behaviour, the system comprising a computer comprising a processor (102) and a storage (104) configured to execute a method according to claim 1.

15. A computer readable medium, or circuit, storing a computer program to operate a method according to claim 1.
